# FASCICULE DE BREVET EUROPEEN

(11) **EP 0 516 534 B1**
(45) Date de publication et mention de la délivrance du brevet: **24.07.1996**
(21) Numéro de dépôt: 92401445.9
(22) Date de dépôt: 26.05.1992
(51) Int. Cl.: G07C 3/00

(54) **Procédé et dispositif de surveillance d'un appareil fonctionnant dans des conditions variables**
Verfahren und Vorrichtung zur Überwachung eines unter variablen Bedingungen laufenden Apparates
Method and device for monitoring an apparatus working under variable conditions

(30) Priorité: 28.05.1991 FR 9106416
(43) Date de publication de la demande: 02.12.1992
(73) Titulaire: EUROPEAN GAS TURBINES SA, F-75116 Paris (FR)
(72) Inventeur: Pourchot, Thierry, F-25200 Montbeliard (FR); Jousset, Sophie, F-91440 Bures Sur Yvette (FR); Wahnon, Elias, F-91400 Orsay (FR); Benveniste, Albert, c/o Irisa, F-35042 Rennes Cedex (FR); Basseville, Michèle, c/o Irisa, F-35042 Rennes Cedex (FR); Zhang, Quing-Hua, c/o Irisa, F-35042 Rennes Cedex (FR)
(74) Mandataire: Bourely, Paul

(56) Documents cités:
- EP-A- 0 246 517
- EP-A- 0 315 307
- EP-A- 0 412 795
- WO-A-90/09644

## Description

La présente invention concerne la surveillance d'un appareil fonctionnant dans des conditions variables.

Selon un procédé de surveillance connu,
- on mesure de façon continue plusieurs paramètres d'influence représentatifs de conditions variables d'origine externe dans lesquelles un appareil à surveiller est amené à fonctionner,
- on mesure de manière suivie un paramètre de performance actuelle représentatif d'une performance de cet appareil et dépendant de ces paramètres d'influence,
- et on en déduit un paramètre interne représentatif d'un état interne de cet appareil, cet état étant évolutif et devant être surveillé.

La présente invention s'applique notamment dans les cas où il s'agit d'effectuer le suivi de l'encrassement d'un compresseur de turbine à gaz. L'état de l'encrassement peut être déterminé par les performances du compresseur : c'est-à-dire par le débit d'air à son entrée et par son rendement polytropique, par exemple. Or ces performances dépendent des huit paramètres suivants :
. pression atmosphérique,
. température ambiante,
. humidité,
. débit, composition et température du carburant,
. état de stabilisation thermique de la machine,
. fréquence du réseau.

Dans ce cas, selon le procédé de surveillance connu, la détermination des performances consistait à se référer à des abaques construites par la firme américaine General Electric Company. Ces abaques sont identiques pour un même type de turbine à gaz et ne tiennent compte que de certains paramètres. Elles ne permettraient pas un suivi fin des performances, tel que l'on en a besoin pour le suivi de l'encrassement.

EP-A-0 315 307 divulgue un procédé et un dispositif pour la surveillance d'une turbine à gaz, utilisant un filtre de Kalman pour estimer des modifications de performance de composants de la turbine à partir de variations de mesures de performance globale de la turbine.

La présente invention a notamment pour but de réaliser un suivi des performances du compresseur tel qu'il permette de détecter d'éventuels incidents mécaniques qui se traduisent par une dégradation importante des performances. Elle a en outre pour but de permettre un suivi fin des performances et une évaluation précise de l'évolution de l'encrassement de manière à optimiser ainsi les opérations d'entretien du compresseur.

Dans ces buts elle a notamment pour objet un procédé de surveillance, caractérisé par le fait qu'il comporte les opérations suivantes :
- préalablement à la surveillance et à partir d'un modèle quantifié du comportement de l'appareil à surveiller, on établit un algorithme de normalisation apte à recevoir lesdits paramètres d'influence et ledit paramètre de performance actuelle et à fournir en réponse un paramètre de performance normalisé, ce dernier paramètre étant représentatif d'une performance que cet appareil aurait dans son état interne actuel si ces paramètres d'influence avaient des valeurs standard prédéterminées et invariables,
- puis, pendant la surveillance, on mesure les paramètres d'influence et de performance actuelle et on les fournit à cet algorithme de normalisation pour qu'il fournisse de manière suivie le paramètre de performance normalisée,
- et on introduit ce paramètre de performance normalisé dans un filtre de Kalman apte à fournir en réponse ledit paramètre interne.

Ce paramètre interne est fourni à un algorithme de détection d'incidents.

De préférence le modèle quantifié du comportement de l'appareil à surveiller est établi expérimentalement à partir de mesures qui sont faites sur cet appareil lorsque ce dernier est dans un état interne connu par exemple lorsqu'il est neuf, de manière que ce modèle constitue une carte d'identité de cet appareil. Cette carte d'identité peut être établie par une méthode d'apprentissage numérique connue telle que celles qui utilisent des réseaux de neurones ou des réseaux d'ondelettes.

De préférence enfin le filtre de Kalman est établi à partir d'un modèle linéaire de l'évolution du paramètre de performance normalisée.

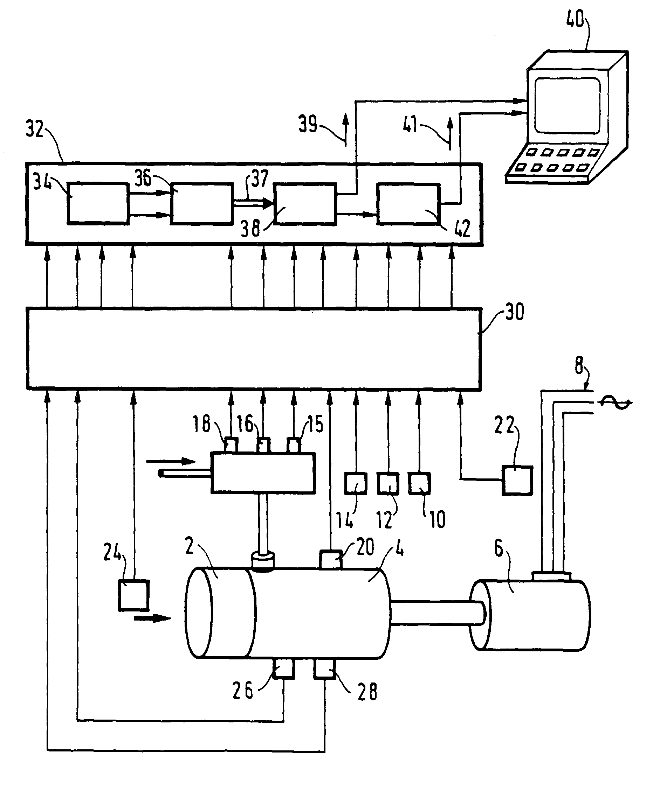

A l'aide de la figure schématique unique ci-jointe, on va décrire plus particulièrement ci-après, à titre d'exemple non limitatif, comment la présente invention peut être mise en oeuvre.

Cette figure représente une vue d'ensemble d'une installation mettant la présente invention en oeuvre. Les paramètres y sont désignés par les numéros de référence des capteurs qui servent à les mesurer.

Conformément à cette figure, l'appareil à surveiller est le compresseur (2) d'une turbine à gaz (4) entraînant un alternateur (6) qui alimente un réseau de distribution d'énergie électrique (8), ce compresseur étant sujet à encrassement.

Les paramètres d'influence sont :
. la pression atmosphérique (10),
. la température ambiante (12),
. l'humidité ambiante (14),
. le débit (15) d'un carburant alimentant cette turbine,
. la composition (16) de ce carburant,
. la température (18) de ce carburant,
. l'état de stabilisation thermique (20) de la turbine avec son compresseur,
. et la fréquence (22) du réseau de distribution d'énergie électrique.

Les paramètres de performance actuelle et normalisé sont composites et représentatifs du débit d'air (24) à l'entrée de ce compresseur et d'un rendement polytropique (26, 28) de ce dernier.

Le paramètre interne est représentatif d'un état d'encrassement de ce compresseur.

Le dispositif selon l'invention comporte d'abord les capteurs 10 à 28.

Il comporte en outre les moyens informatiques suivants :
- un système d'acquisition de données 30 recevant les signaux fournis par ces capteurs et fournissant les paramètres correspondants sous une forme utilisable.
- Et un processeur 32 comportant lui même un algorithme d'apprentissage 34, ce dernier est utilisé préalablement à la surveillance. Il a pour fonction d'introduire, dans un algorithme général de normalisation antérieurement organisé mais non quantifié, des valeurs quantifiées déterminées expérimentalement de manière à établir un algorithme de normalisation utilisable par la suite, comme précédemment mentionné. Ce processeur comporte en outre cet algorithme de normalisation 36, et un filtre de Kalman 38 qui fournit le paramètre interne précédemment mentionné. Ce filtre est basé sur un modèle linéaire de l'évolution du compresseur et il tient compte de l'imprécision des mesures effectuées par les capteurs. Le modèle utilisé est la traduction quantitative d'une connaissance heuristique disant que l'encrassement introduit une dégradation du rendement de l'ordre de 2 % par mois. Le paramètre interne représentatif de l'encrassement du compresseur est fourni à un terminal d'ordinateur 40 ainsi qu'à un algorithme de détection d'incidents 42 qui fournit un indicateur d'incident 41 au terminal 40.

## Revendications

1. Procédé de surveillance d'un appareil fonctionnant dans des conditions variables, procédé selon lequel
- on mesure de manière suivie plusieurs paramètres d'influence (10...22) représentatifs de conditions variables d'origine externe dans lesquelles un appareil à surveiller (2) est amené à fonctionner,
- on mesure de manière suivie un paramètre de performance actuelle (24, 26, 28) représentatif d'une performance de cet appareil et dépendant de ces paramètres d'influence,
- et on en déduit un paramètre interne (39) représentatif d'un état interne de cet appareil, cet état étant évolutif et devant être surveillé,
- ce procédé étant caractérisé par le fait qu'il comporte les opérations suivantes :
- préalablement à la surveillance et à partir d'un modèle quantifié du comportement de l'appareil à surveiller (2), on établit un algorithme de normalisation (36) apte à recevoir lesdits paramètres d'influence (10...22) et ledit paramètre de performance actuelle (24, 26, 28) et à fournir en réponse un paramètre de performance normalisé (37), ce dernier paramètre étant représentatif d'une performance que cet appareil aurait dans son état interne actuel si ces paramètres d'influence avaient des valeurs standard prédéterminées et invariables,
- puis, pendant la surveillance, on mesure les paramètres d'influence et de performance actuelle et on les fournit à cet algorithme de normalisation pour qu'il fournisse de manière suivie le paramètre de performance normalisé (37),
- et on introduit ce paramètre de performance normalisé dans un filtre de Kalman (38) apte à fournir en réponse ledit paramètre interne (39).

2. Procédé selon la revendication 1, caractérisé par le fait que ledit modèle quantifié du comportement de l'appareil à surveiller (2) est établi expérimentalement à partir de mesures qui sont faites sur cet appareil lorsque ce dernier est dans un état interne connu, de manière que ce modèle constitue une carte d'identité de cet appareil.

3. Procédé selon la revendication 2, caractérisé par le fait que ladite carte d'identité est établie par une méthode d'apprentissage numérique.

4. Procédé selon la revendication 1, caractérisé par le fait que ledit filtre de Kalman (38) est établi à partir d'un modèle linéaire de l'évolution du paramètre de performance normalisé (37).

5. Procédé selon la revendication 1 dans lequel l'appareil à surveiller est le compresseur (2) d'une turbine à gaz (4) entraînant un alternateur (6) qui alimente un réseau de distribution d'énergie électrique (8), ce compresseur étant sujet à encrassement,
- les paramètres d'influence comportent :
. la pression atmosphérique (10),
. la température ambiante (12),
. l'humidité ambiante (14),
. le débit (15) d'un carburant alimentant cette turbine,
. la composition (16) de ce carburant,
. la température (18) de ce carburant,
. l'état de stabilisation thermique (20) de la turbine avec son compresseur,
. et la fréquence (22) du réseau de distribution d'énergie électrique,
- les paramètres de performance actuelle et normalisée sont composites et représentatifs du débit d'air (24) de ce compresseur et/ou d'un rendement polytropique (26, 28) de ce dernier,
- le paramètre interne est représentatif d'un état d'encrassement et/ou d'usure de ce compresseur.

6. Dispositif de surveillance d'un appareil fonctionnant dans des conditions variables, ce dispositif comportant des capteurs de mesure (10....28) pour fournir des paramètres d'influence et de performance actuelle prévus à la revendication 1, ce dispositif étant caractérisé par le fait qu'il comporte en outre des moyens informatiques (32) pour mettre en oeuvre l'algorithme de normalisation (36) et le filtre de Kalman (38) prévus à la revendication 1.

7. Dispositif selon la revendication 6, caractérisé par le fait que lesdits moyens informatiques (32) comportent en outre des moyens d'apprentissage (34) pour au moins quantifier l'algorithme de normalisation (36) et/ou le filtre de Kalman (38).

## Patentansprüche

1. Verfahren zur Überwachung eines unter variablen Bedingungen arbeitenden Geräts,
- wobei man kontinuierlich mehrere Einflußparameter (10 bis 22) mißt, die für von außen kommende variable Bedingungen repräsentativ sind, unter denen das zu überwachende Gerät (2) arbeiten soll,
- wobei kontinuierlich ein aktueller Betriebsparameter (24, 26, 28) gemessen wird, der für einen Betrieb dieses Geräts repräsentativ ist und von diesen Einflußparametern abhängt,
- und wobei man daraus einen internen Parameter (39) ableitet, der für einen internen Zustand dieses Geräts repräsentativ ist, der sich verändert und überwacht werden soll, dadurch gekennzeichnet, daß das Verfahren die folgenden Schritte aufweist:
- vor der Überwachung und ausgehend von einem quantifizierten Modell des Verhaltens des zu überwachenden Geräts (2) erstellt man einen Normalisierungsalgorithmus (36), der die Einflußparameter (10 bis 22) und den aktuellen Betriebsparameter (24, 26, 28) empfangen kann und daraus einen normalisierten Betriebsparameter (37) bildet, der für ein Betriebsverhalten repräsentativ ist, das dieses Gerät in seinem aktuellen internen Zustand hätte, wenn diese Einflußparameter vorgegebene und unveränderbare Standardwerte hätten,
- dann mißt man während der Überwachung die Einflußparameter und den aktuellen Betriebsparameter und liefert sie an den Normalisierungsalgorithmus, damit dieser kontinuierlich den normalisierten Betriebsparameter (37) liefert,
- und man speist diesen normalisierten Betriebsparameter in ein Kalman-Filter (38) ein, das als Antwort den internen Parameter (39) liefern kann.

2. Verfahren nach Anspruch 1, dadurch gekennzeichnet, daß das quantifizierte Modell des Verhaltens des zu überwachenden Geräts (2) experimentell ausgehend von Messungen erstellt wird, die an diesem Gerät vorgenommen werden, wenn es sich in einem bekannten internen Zustand befindet, so daß das Modell eine Kennkarte dieses Geräts bildet.

3. Verfahren nach Anspruch 2, dadurch gekennzeichnet, daß die Kennkarte durch eine digitale Lernmethode erstellt wird.

4. Verfahren nach Anspruch 1, dadurch gekennzeichnet, daß das Kalman-Filter (38) ausgehend von einem linearen Modell der Entwicklung des normalisierten Betriebsverhaltensparameters (37) erstellt wird.

5. Verfahren nach Anspruch 1, in dem das zu überwachende Gerät der Kompressor (2) einer Gasturbine (4) ist, die einen ein elektrisches Energieverteilungsnetz (8) speisenden Wechselstromgenerator (6) antreibt, wobei der Kompressor verschmutzt werden kann und die Einflußparameter aufweisen:
. den Atmosphärendruck (10),
. die Umgebungstemperatur (12),
. den Feuchtigkeitsgehalt (14) in der Umgebung,
. den Verbrauch (15) an Brennstoff in der Turbine,
. die Zusammensetzung (16) dieses Brennstoffs,
. die Temperatur (18) des Brennstoffs,
. den thermischen Stabilisationszustand (20) der Turbine mit ihrem Kompressor,
. und die Netzfrequenz (22) des elektrischen Energieverteilungsnetzes,
wobei die aktuellen und normalisierten Betriebsparameter zusammengesetzte Parameter sind und für den Luftdurchsatz (24) des Kompressors und/oder einen polytropen Wirkungsgrad (26, 28) des Kompressors repräsentativ sind, und wobei der interne Parameter für einen Verschmutzungszustand und/oder einen Abnutzungsgrad dieses Kompressors repräsentativ ist.

6. Vorrichtung zur Überwachung eines Geräts, das unter variablen Bedingungen betrieben wird, wobei die Vorrichtung Meßsonden (10 bis 28) aufweist, die im Anspruch 1 vorgesehene Parameter bezüglich des Einflusses und des aktuellen Betriebsverhaltens liefern, dadurch gekennzeichnet, daß die Vorrichtung weiter Informatikmittel (32) aufweist, um den Normalisierungsalgorithmus (36) und das Kalman-Filter (38), die in Anspruch 1 vorgesehen sind, zu implementieren.

7. Vorrichtung nach Anspruch 6, dadurch gekennzeichnet, daß die Informatikmittel außerdem Lernmittel (34) aufweisen, um zumindest den Normalisierungsalgorithmus (36) und/oder das Kalman-Filter (38) zu quantifizieren.

## Claims

1. A method of monitoring an apparatus operating under varying conditions, in which method:
- a plurality of influential parameters (10, ..., 22) representative of varying conditions of external origin under which an apparatus to be monitored (2) is caused to operate are measured in continuous manner;
- an actual performance parameter (24, 26, 28) representative of performance of the apparatus and dependent on the influential parameters is measured in continuous manner; and
- an internal parameter (39) is deduced therefrom representative of an internal state of the apparatus, which state varies and needs to be monitored;
- the method being characterized by the fact that it includes the following operations:
- prior to monitoring, and starting from a quantified model of the behavior of the apparatus to be monitored (2), a normalization algorithm (36) is established suitable for receiving said influential parameters (10,..., 22) and said actual performance parameter (24, 26, 28) and for delivering in response thereto a normalized performance parameter (36), which parameter is representative of the performance which said apparatus would have in its actual internal state if the influential parameters had standard predetermined and non-varying values;
- then, during the monitoring, the influential parameters and the actual performance are measured and delivered to said normalization algorithm so that it provides the normalized performance parameter (37) in continuous manner; and
- the normalized performance parameter is input to a Kalman filter (38) suitable for responding thereto by providing said internal parameter (39).

2. A method according to claim 1, characterized by the fact that said quantified model of the behavior of the apparatus to be monitored (2) is established experimentally from measurements performed on said apparatus while it is in a known internal state, so that the model constitutes an identity card for the apparatus.

3. A method according to claim 2, characterized by the fact that said identity card is established by a digital learning method.

4. A method according to claim 1, characterized by the fact that said Kalman filter (38) is established on the basis of a linear model for variation in the normalized performance parameter (37).

5. A method according to claim 1, in which the apparatus to be monitored is the compressor (2) of a gas turbine (4) driving an alternator (6) which feeds an electrical power distribution grid (8), the compressor being subjected to build-up of deposits,
- the influential parameters including:
. atmospheric pressure (10);
. ambient temperature (12);
. ambient humidity (14);
. the flow rate (15) of a fuel feeding the turbine;
. the composition (16) of the fuel;
. the temperature (18) of the fuel;
. the state of thermal stabilization (20) of the turbine together with its compressor; and
. the frequency (22) of the electricity power distribution grid;
- the actual and normalized performance parameters are composite and representative of the air flow rate (24) of the compressor and/or of a polytropic efficiency (26, 28) thereof; and
- the internal parameter is representative of the degree of deposit build-up and/or the wear of the compressor.

6. A device for monitoring apparatus operating under varying conditions, said device including measurement sensors (10, ..., 28) for providing the influential and actual performance parameters specified in claim 1, the device being characterized by the fact that it further includes computer means (32) for implementing the normalization algorithm (36) and the Kalman filter (38) specified in claim 1.

7. A device according to claim 6, characterized by the fact that said computer means (32) further include learning means (34), at least for quantifying the normalization algorithm (36) and/or the Kalman filter (38).
